# FASCICULE DE BREVET EUROPEEN

(11) **EP 3 349 161 B1**
(45) Date de publication et mention de la délivrance du brevet: **31.05.2023**
(21) Numéro de dépôt: 18150881.3
(22) Date de dépôt: 09.01.2018
(51) Int. Cl.: G06Q 20/18, G06Q 30/02, G07F 19/00

(54) **PROCÉDÉ DE TRAITEMENT D'UNE TRANSACTION DE PAIEMENT, BORNE DE PAIEMENT ET PROGRAMME CORRESPONDANT**
VERFAHREN ZUR AUSFÜHRUNG EINER BEZAHLTRANSAKTION, DAZUGEHÖRIGE BEZAHLTERMINAL UND PROGRAMM
METHOD OF HANDLING A PAYMENT TRANSACTION, CORRESPONDING PAYMENT TERMINAL AND PROGRAM

(30) Priorité: 17.01.2017 FR 1750355
(43) Date de publication de la demande: 18.07.2018
(73) Titulaire: Banks and Acquirers International Holding, 75015 Paris (FR)
(72) Inventeur: QUENTIN, Pierre, 95880 ENGHIEN-LES-BAINS (FR)
(74) Mandataire: Vidon Brevets & Stratégie

(56) Documents cités:
- US-A1- 2004 205 491

## Description

### 1. Domaine

La présente technique se rapporte à la gestion de dispositifs de fourniture de biens et de services non surveillés. De tels dispositifs sont également appelés *« unattended »* dans la littérature. Plus particulièrement, la présente se rapporte à un procédé de traitement de transaction de paiement par l'intermédiaire de tels dispositifs. Plus particulièrement encore, on présente un procédé de traitement de transaction de paiement de biens ou de services ainsi qu'un dispositif configuré pour la mise en oeuvre d'un tel procédé.

### 2. Art antérieur

On connaît des dispositifs dont l'objectif est de permettre à un utilisateur de réaliser un achat de biens ou de service de manière autonome, c'est-à-dire sans la supervision d'un commerçant. De tels dispositifs sont également appelés *« unattended »* (sans surveillance). Par exemple, les stations-services, les bornes pour la délivrance de tickets de cinémas. Ces bornes, classiques, sont de tailles réduites et permettant de réaliser des paiements en utilisant un terminal de paiement qui accepte plusieurs formes de paiement que sont le paiement par carte à puce et le paiement par carte magnétique.

Plus récemment, des bornes de grande taille ont fait leur apparition. Il s'agit généralement de bornes multimédias, comprenant de grands écrans (généralement 46 pouces de diagonales), qui peuvent également être tactiles. Outre le fait qu'elles soient relativement chères, les problèmes techniques présentés par ces bornes sont nombreux. Le premier d'entre eux est ces bornes multimédias sont de types propriétaires. Cela signifie qu'une borne multimédia comprend un ensemble de composants (écran, unité centrale, capteurs de présence, système d'exploitation, application de gestion de la borne) qui sont agencés entre eux pour former la borne. Plus récemment encore, des bornes multimédia qui embarquent des fonctionnalités de paiement ont également été développées. Ces bornes multimédia comprennent globalement les mêmes composants qu'une borne multimédia classique, mais elles embarquent en plus un terminal de paiement, généralement sans contact. Le document US 2004/205491 A1 décrit par exemple une borne multimédia de ce type.

Dans une telle borne multimédia, également appelée borne de paiement en référence aux bornes de plus petite taille précédemment présentées, on utilise par exemple un terminal de paiement de Type NFC (« Near Field Channel »), encore appelé transmission de données en champs proches. Concrètement, pour réaliser un paiement avec une telle borne de paiement, l'utilisateur appose son moyen de paiement compatible NFC à un endroit bien précis de la borne pour effectuer le paiement de ce qui est affiché à l'écran. Il peut s'agir d'un paiement d'un bien ou d'un service. Il peut par exemple s'agir d'un paiement de places de spectacles, ou encore d'un don à une association. Dans certains cas, il peut s'agir du paiement d'un bien (qui est alors livré à une adresse convenue).

Ce type de borne est compliqué à construire et à mettre en oeuvre. En effet, en règle générale les offres de produits ou de services qui sont affichées sur la borne sont préprogrammées. Cela signifie que soit les offres sont directement intégrées à une mémoire de masse de la borne, soit elles sont téléchargées depuis un serveur dédié à l'aide d'un réseau de communication. Des offres sont enregistrées sur le serveur dédié qui dispose, pour une borne donnée, d'un certain nombre d'offres. Sur requête, le serveur transmet une ou plusieurs offres à une application propriétaire qui est exécutée sur la borne. L'application dédiée dispose des spécificités de la borne (taille d'écran, nombre de terminaux de paiement) et adapte le contenu des offres à la borne en question.

Une telle construction freine de manière importante le développement de telles bornes, et ce pour au moins deux raisons. En premier lieu, il est nécessaire de mettre en oeuvre une application dédiée. Cette application dédiée, installée sur la borne elle-même, doit être spécifiquement construite pour cette borne, ou à tout le moins spécialement compilée (et/ou paramétrée) pour cette borne : c'est elle qui connaît la taille de l'écran, le nombre de terminaux de paiement présents et leur fonctionnement. Cela signifie que pour un nombre important de bornes, il est nécessaire que l'exploitant (de ces bornes) dispose de logiciels spécialisés d'exploitation de parcs de machines, comprenant une gestion de configuration spécifique. Or de telles solutions coûtent cher. En deuxième lieu, le développement de ce type d'application coûte également cher. Lorsque de nouvelles fonctionnalités apparaissent dans les composants installés dans les bornes, il est nécessaire de redévelopper l'application en question pour qu'elle puisse prendre en compte ces nouvelles fonctionnalités.

Il existe donc un besoin de fournir une solution simple, efficace et largement utilisable pour simplifier la mise en oeuvre de bornes de paiement.

### 3. Résumé

L'invention ne pose pas ces problèmes de l'art antérieur. Plus particulièrement, l'invention apporte une solution plus simple aux problématiques préalablement identifiées. En effet, la présente technique permet d'offrir une solution d'intégration de terminaux de paiement dans une borne de paiement plus simple, moins couteuse et plus efficace que les solutions existantes.

Plus particulièrement, la présente technique porte sur un procédé de traitement d'une transaction de paiement selon la revendication 1.

Ainsi, le contenu est associé à une balise html standardisée de paiement qui permet au navigateur de communiquer avec un terminal de paiement et d'initier une transaction de paiement.

Selon une caractéristique particulière la requête d'obtention de contenu comprend au moins une donnée d'identification de borne de paiement.

Ainsi, le serveur est en mesure d'identifier les contenus qui sont destinés à cette borne de paiement

Selon une caractéristique particulière, l'étape de traitement du contenu html comprend une étape de détermination, au sein de la vue à restituer, d'un emplacement d'une donnée représentative de la balise de paiement, en fonction d'une position d'une antenne sans contact dudit au moins un terminal de paiement au sein de ladite borne de paiement.

Ainsi, la balise de paiement est clairement identifiable pour l'utilisateur, qui sait exactement à quel endroit il doit positionner son moyen de paiement pour effectuer le paiement. C'est l'avantage de l'utilisation d'une balise : le navigateur est responsable du rendu du contenu HTML, et donc de la balise : le navigateur adapte le positionnement de la balise à la configuration de l'écran.

Selon une caractéristique particulière, ladite balise de paiement comprend au moins un attribut de définition de l'offre.

Selon un mode de réalisation particulier, ledit attribut de définition de l'offre est une adresse de localisation d'une offre, auprès d'un serveur transactionnel, ladite adresse de localisation comprenant un paramètre d'identification de l'offre et au moins un identifiant d'un terminal de paiement appartenant à ladite borne de paiement.

Selon une caractéristique particulière, le procédé comprend une étape d'annulation de ladite au moins une transaction de paiement, ladite étape d'annulation étant mise en oeuvre lorsqu'une durée d'affichage de l'offre est égale à un paramètre temporel déterminé et lorsqu'aucun paiement n'a été effectué durant la période temporelle débutant à l'issue de la préparation de la transaction et finissant au temps défini par ledit paramètre temporel.

Ainsi, périodiquement, il est possible de réitérer des transactions qui ont été ouvertes. De manière avantageuse, le paramètre temporel correspond à la durée maximum d'ouverture de la transaction auprès du serveur transactionnel.

Selon un mode de réalisation particulier, le procédé comprend, précédemment à l'étape de réception par le navigateur, du contenu comprenant ladite au moins une balise de paiement, au niveau du serveur de contenu :
- une étape de réception de la requête en provenance du navigateur ;
- une étape d'identification, par l'intermédiaire de cette requête, de ladite borne de paiement, délivrant un identifiant de ladite borne de paiement ;
- une étape d'obtention, au sein d'une base de donnée, en fonction de l'identifiant, d'un contenu à transmettre à ladite borne, ledit contenu comprenant au moins une offre comprenant des paramètres d'offre ;
- une étape d'obtention, pour chaque offre identifiée dans ledit contenu d'un couple de données comprenant un identifiant de terminal de paiement et une donnée chiffrée de l'offre ;
- création, par le serveur de contenu, d'une adresse de localisation d'offre, vers un serveur transactionnel comprenant l'identifiant du terminal de paiement et ladite donnée chiffrée de l'offre ;
- création, à partir dudit contenu et des adresses de localisation d'offre, du contenu html comprenant une balise de paiement par offre.

Selon un mode de réalisation particulier, le procédé comprend, précédemment à l'étape de réception par le navigateur, du contenu comprenant ladite au moins une balise de paiement, au niveau du serveur de contenu :
- une étape de réception de la requête en provenance du navigateur ;
- une étape d'identification, par l'intermédiaire de cette requête, de ladite borne de paiement, délivrant un identifiant de ladite borne de paiement ;
- une étape d'obtention, au sein d'une base de donnée, en fonction de l'identifiant de la borne de paiement, d'un contenu à transmettre à ladite borne, ledit contenu comprenant au moins une offre comprenant des paramètres d'offre ;
- une étape optionnelle d'obtention, pour chaque offre identifiée dans ledit contenu, auprès d'un serveur transactionnel, d'une donnée représentative d'un « défi » associé à l'offre ;
- une étape de création, à partir dudit contenu et des données de l'offre, du contenu html comprenant une balise de paiement pour l'offre, comprenant le défi optionnel.

L'invention se rapporte également à un dispositif électronique autonome de traitement de transaction de paiement, dite borne de paiement, selon la revendication 9.

Selon une implémentation préférée, les différentes étapes des procédés selon l'invention sont mises en oeuvre par un ou plusieurs logiciels ou programmes d'ordinateur, comprenant des instructions logicielles destinées à être exécutées par un processeur de données d'un module relais selon l'invention et étant conçu pour commander l'exécution des différentes étapes des procédés.

En conséquence, l'invention vise aussi un programme, susceptible d'être exécuté par un ordinateur ou par un processeur de données, ce programme comportant des instructions pour commander l'exécution des étapes d'un procédé tel que mentionné ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un processeur de données, et comportant des instructions d'un programme tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy dise) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

Selon un mode de réalisation, l'invention est mise en oeuvre au moyen de composants logiciels et/ou matériels. Dans cette optique, le terme "module" peut correspondre dans ce document aussi bien à un composant logiciel, qu'à un composant matériel ou à un ensemble de composants matériels et logiciels.

Un composant logiciel correspond à un ou plusieurs programmes d'ordinateur, un ou plusieurs sous-programmes d'un programme, ou de manière plus générale à tout élément d'un programme ou d'un logiciel apte à mettre en oeuvre une fonction ou un ensemble de fonctions, selon ce qui est décrit ci-dessous pour le module concerné. Un tel composant logiciel est exécuté par un processeur de données d'une entité physique (terminal, serveur, passerelle, routeur, etc.) et est susceptible d'accéder aux ressources matérielles de cette entité physique (mémoires, supports d'enregistrement, bus de communication, cartes électroniques d'entrées/sorties, interfaces utilisateur, etc.).

De la même manière, un composant matériel correspond à tout élément d'un ensemble matériel (ou hardware) apte à mettre en oeuvre une fonction ou un ensemble de fonctions, selon ce qui est décrit ci-dessous pour le module concerné. Il peut s'agir d'un composant matériel programmable ou avec processeur intégré pour l'exécution de logiciel, par exemple un circuit intégré, une carte à puce, une carte à mémoire, une carte électronique pour l'exécution d'un micrologiciel (firmware), etc.

Chaque composante du système précédemment décrit met bien entendu en oeuvre ses propres modules logiciels.

Les différents modes de réalisation mentionnés ci-dessus sont combinables entre eux pour la mise en oeuvre de l'invention.

### 4. Dessins

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :
- les figures 1A et 1B présentent une borne de paiement objet de la présente ;
- la figure 2 présente plus en détail les composant d'une telle borne de paiement ;
- la figure 3 présente de manière générale l'obtention de données de transaction par le navigateur intégré à une borne de paiement objet de la présente ;
- la figure 4 décrit la mise en oeuvre d'une balise de paiement dans un mode de réalisation spécifique ;
- la figure 5 décrit la mise en oeuvre d'une balise de paiement dans un autre mode de réalisation.

### 5. Description

### 5.1. Description générale

Comme explicité précédemment, d'une manière générale, la technique propose le remplacement de l'application « propriétaire » de mise en oeuvre de la borne de paiement. Ce remplacement est effectué au profit d'un navigateur (également appelé « Browser » en anglais). Ce remplacement permet de ne disposer que d'un nombre très limité de type d'application de gestion de borne de paiement. Essentiellement, à supposer qu'une borne de paiement puisse mettre en oeuvre un système Windows^{™} ou un système Linux^{™}, seules deux versions du navigateur sont alors nécessaires : une pour l'environnement Windows^{™} et une pour l'environnement Linux^{™}.

Un autre avantage est de laisser au serveur la responsabilité de l'affichage des offres sur la borne. En effet, comme l'application de gestion « classique » est remplacée par un navigateur, celui-ci se contente d'afficher les données qui lui sont transmises, selon un format qui lui est également transmis. Ainsi, selon la présente, le navigateur reçoit, de la part du serveur, un document de type « *html* », auquel on adjoint une ou puiseurs feuilles de style et une ou plusieurs bibliothèques de code *« javascript ».* L'adjonction de ces données, peut être réalisée par l'insertion de lien vers des ressources ou directement en insérant les données dans le document de type « *html ».*

Cependant, bien qu'une telle mise en oeuvre soit intéressante d'un point de vue technique et économique, elle ne permet pas de résoudre l'ensemble du problème posé. Au-delà de la problématique de la gestion de la plateforme, se pose également la gestion des paiements effectués par l'intermédiaire de la borne. On rappelle en effet que la borne est en mesure d'effectuer des paiements, par l'intermédiaire d'un ou plusieurs terminaux de paiement intégrés directement dans la borne. L'utilisation d'une application « propriétaire » sous un environnement « maîtrisé » présente comme avantage une gestion également maitrisée du terminal de paiement. Le remplacement de cette application « propriétaire » par un navigateur pose des problèmes à résoudre, et notamment celui de la maîtrise des terminaux de paiement et celui de la maîtrise des paiements à réaliser.

Pour résoudre ce problème, on met en oeuvre, selon la présente technique, une nouvelle balise, dite balise de paiement. Cette balise, connue du navigateur, comprend des données relatives au paiement à réaliser par la borne. Le fonctionnement de cette balise est détaillé par la suite. Lors de la réception par le navigateur de la borne (en provenance du serveur), du document de type html, le navigateur affiche ce document à l'écran de la borne, agrémenté des styles des feuilles de styles et comprenant du code de type « javascript ». Au moins une balise de paiement est présente au sein de ce document, balise de paiement que le navigateur interprète, afin d'effectuer les actions requises par cette balise, et ce en lien avec le ou les terminaux de paiement de la borne.

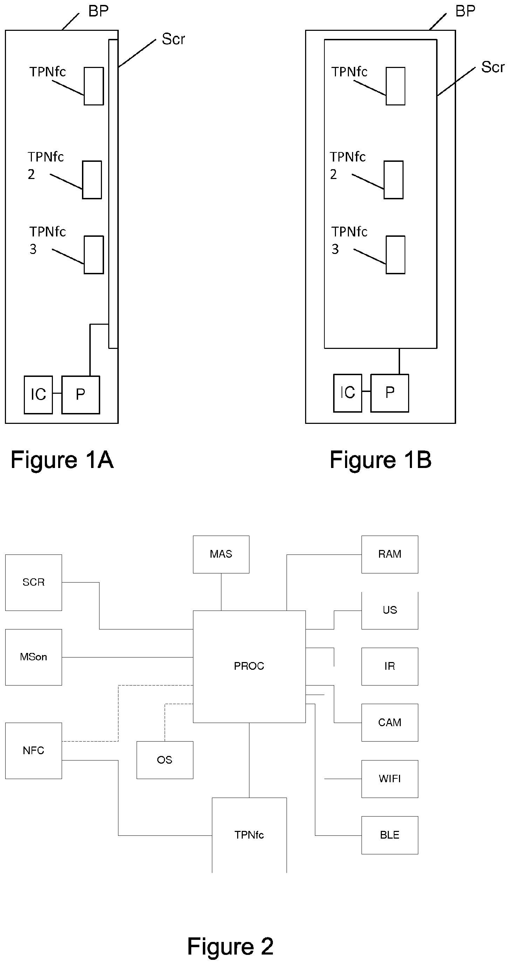

On décrit, en relation avec les figures 1A et 1B, une borne de paiement objet de la présente. Une telle borne se présente sous la forme d'un boîtier, comprenant un moyen de restitution d'information, tel qu'un écran et/ou un haut-parleur. Le moyen de restitution d'information est connecté, par l'intermédiaire d'un ou de plusieurs bus de données à un processeur de traitement. Ce processeur peut être tout type de processeur usuellement destiné à de tels tâches, tel que des processeurs de type PC ou des processeurs destinés à des terminaux plus compacts (tels que des systèmes sur puce, *« SOC »* en anglais pour *« System on Chip* »). Le processeur de traitement comprend un bus d'accès à une mémoire vive, un bus d'accès à une mémoire de masse, un bus d'accès à une ou plusieurs interfaces de communication réseau (interface réseau de type *WiFi, Bluetooth, RJ45)* et un ou plusieurs bus d'accès à des interfaces de communication de type série (« *USB »* pour *« Universal Serial Bus »).* En sus, le processeur comprend un bus d'accès à au moins un terminal de communication se présentant sous la forme d'un terminal de paiement de type sans contact. Un tel terminal de paiement sans contact comprend un processeur de traitement sécurisé, une mémoire sécurisée, un bus d'accès à un processeur NFC, une antenne NFC relié au processeur NFC. Le terminal de paiement peut également comprendre une ou plusieurs interfaces de communication dédiées. En fonction des modes de réalisation, les interfaces de communication du terminal de paiement peuvent être partagées avec les interfaces de communication du processeur de traitement. Le processeur de traitement et les différents modules qui composent la borne de paiement sont pilotés par un système d'exploitation. Le système d'exploitation est de type standard et peut être basé sur une version dérivée du système Linux^{™}. Il comprend des modules de gestion des différents composants de la borne, à l'exception du ou des terminaux de paiement. Le système d'exploitation fait, pour sa part, fonctionner un navigateur adapté à la mise en oeuvre de la présente, et notamment adapté à la gestion et à l'exploitation de balises de paiement. Un terminal de paiement, pour sa part est également piloté par un système d'exploitation, de type propriétaire (cela ne change pas par rapport aux bornes de l'art antérieur).

Cependant, les données transmises au terminal de paiement et reçues de la part du terminal de paiement sont sensiblement différentes de celles de l'art antérieur, comme cela est explicité par la suite.

On présente, en relation avec la figure 2, l'architecture d'une borne de paiement selon la présente technique. Une telle borne de paiement (BP) comprend un écran (Scr), de préférence un écran tactile. Un tel écran dispose d'une taille suffisante pour pouvoir afficher, de manière visible par des passants, un ou plusieurs messages publicitaires. Ainsi, l'écran comprend typiquement une taille comprise entre 32 et 55 pouces de diagonale. Un message publicitaire typique affiché par un tel écran comprend par exemple une vidéo et/ou des photos et/ou du texte.

En fonction de l'environnement de destination de la borne de paiement (BM), cette dernière peut également comprendre un module de restitution sonore (MSon) : le module de restitution sonore est destiné à produire des sons qui peuvent accompagner les messages publicitaires émis, lorsque de tels sons peuvent être perçus par les utilisateurs.

L'écran (Scr) et le module de restitution sonore (s'il est présent) sont connectés par un ou deux bus de transport de données à un processeur (Proc) de traitement. Un tel processeur (Proc) comprend suffisamment de capacités de traitement pour effectuer diverses tâches de traitement multimédia, comme par exemple l'affichage d'une vidéo de qualité et/ou l'affichage d'images de résolution supérieure. Le processeur (Proc) est en outre en mesure de recevoir des données par l'intermédiaire de bus de transport de données reliant le processeur (Proc) au module NFC (si celui-ci n'est pas directement géré par les terminaux de paiement intégrés) ou encore aux modules de communication sans fil (comme par exemple le module WiFi ou le module Bluetooth, BLE).

Le processeur (Proc) est par ailleurs relié de manière optionnelle, par l'intermédiaire d'un bus de données, à des capteurs (ultrasonore US, infrarouge IR ou encore à une caméra CAM) pour recevoir des signaux émis par ces capteurs afin éventuellement de détecter la présence d'un ou plusieurs utilisateurs. Ces signaux sont transformés par le processeur et fournis au système d'exploitation (OS). Le processeur comprend également une mémoire vive (RAM) et une mémoire de stockage (MAS).

Le système d'exploitation se charge d'exécuter le navigateur et de gérer les échanges de données entre les différents composants et le navigateur. Dans d'autres modes de réalisation, la borne de paiement peut se présenter sous la forme d'un terminal de type ordinateur, tablette ou smartphone, qui embarque des composants identiques ou similaires dans leurs fonctions et qui sont aptes à mettre en oeuvre les procédés décrits ici, auquel cas, l'expression borne de paiement sera remplacée par une expression plus adéquate.

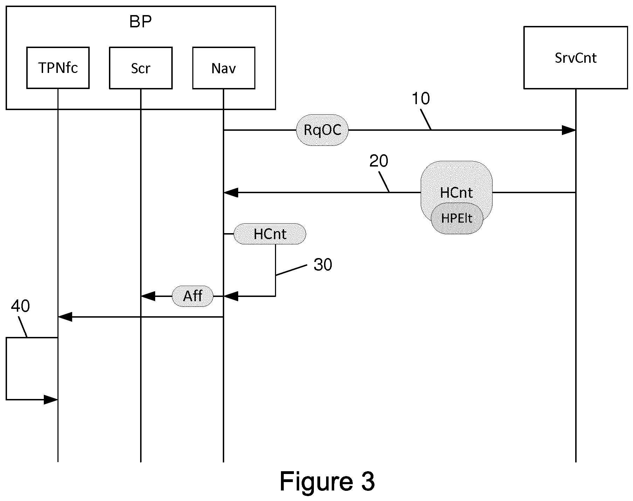

On décrit, en relation avec la figure 3, le fonctionnement général d'une borne de paiement pour effectuer un paiement. Dans un premier temps, la borne de paiement doit recevoir, de la part du serveur, les données à afficher et les informations relatives aux paiements. Le procédé mis en oeuvre à cette occasion est le suivant :
- une étape de transmission (10), au serveur de contenus (SrvCnt), d'une requête d'obtention de contenu (RqOC), ladite requête d'obtention de contenu comprenant au moins une donnée d'identification (iBP) de borne de paiement ;
   o cette requête est mise en oeuvre à partir de la borne ; c'est donc la borne qui est la requérante des données à afficher, et ce pour permettre une mise en oeuvre correcte d'un paiement, comme cela est explicité infra ;
- une étape de réception (20), en provenance du serveur de contenus (SrvCnt), d'au moins un contenu html (HCnt) à afficher, ledit contenu comprenant au moins une balise de paiement (HPElt) ;
- une étape de traitement (30) dudit contenu html (HCnt), délivrant une vue (Aff) dudit contenu html (HCnt) sur ledit au moins un moyen de restitution (Scr), comprenant notamment l'affichage, par ledit navigateur, dudit contenu, des données représentatives de la balise de paiement étant affichées à proximité d'une antenne NFC d'un terminal de paiement de la borne de paiement.

De manière complémentaire, le contenu du document de type html comprend également une donnée représentative d'un temps d'affichage du contenu. Lorsque ce temps d'affichage est écoulé, le procédé précédent est à nouveau exécuté, afin d'afficher un nouveau contenu à l'écran. L'objet de cette dernière étape est double : d'une part il permet de ne pas laisser afficher en permanence un contenu « statique » qui aurait pour conséquence, d'une part de diminuer la durée de vie du dispositif d'affichage et d'autre part d'avoir un effet relativement déceptif (dû essentiellement au fait qu'un affichage fixe n'attire pas l'oeil et donc ne valorise pas les offres de biens et de services affichées sur la borne).

Dans un deuxième temps, postérieurement ou concomitamment à l'affichage du contenu à l'écran, le terminal de paiement prépare (40), en avance (par anticipation), la (ou les) transaction(s) à effectuer. Le nombre de transactions préparées dépend d'une part du nombre de terminaux de paiement installés dans la borne et d'autre part du nombre de balises présentes dans le contenu. Par exemple, s'il y a quatre terminaux de paiement et seulement trois balises, seules trois transactions sont préparées. A l'inverse, si trois terminaux de paiements sont installés dans la borne et que quatre balises de paiement sont présentes, seules trois transactions sont préparées. La préparation d'une transaction (en avance, c'est-à-dire avant qu'un utilisateur ait manifesté l'intention d'acheter un bien ou un service) a deux objets : d'une part ne pas avoir à détecter la présence de l'utilisateur (pour initier la transaction) et d'autre part permettre un paiement immédiat (lors de l'utilisation du moyen de paiement par l'utilisateur).

La préparation d'une transaction est essentiellement effectuée grâce à la (ou les) balises de paiement contenue dans le document html.

Une balise de paiement, selon la présente, est essentiellement une instruction, destinée au navigateur, permettant à celui-ci de préparer la transaction et ce, quelle que soit la nature de celle-ci. Une balise de paiement est en quelque sorte une interface universelle entre le serveur, qui transmet le contenu et le terminal de paiement. La balise de paiement est mise en oeuvre conjointement avec le navigateur. La balise de paiement prend globalement la forme suivante :
*<purchase> <*/*purchase>*

La balise de paiement comprend une pluralité d'attributs, dont les habituels attributs d'identification *(« id », « name », « image »)* et de styles permettant l'affichage d'un contenu de la balise lorsque c'est nécessaire. La balise de paiement comprend également des attributs spécifiques qui permettent de préparer la transaction de paiement. Essentiellement, deux méthodes, exclusives ou complémentaires, en fonction de l'implémentation, permettent de préparer la transaction.

Les attributs possibles de la balise sont les suivants :
- link : spécifie une adresse de localisation des données de transaction ; il s'agit d'un attribut permettant d'obtenir les données de la transaction auprès d'une localisation différente de celle du contenu ;
- amount : spécifie le montant de la transaction ;
- currency : spécifie la devise de la transaction ;
- merchant : spécifie des paramètres de commerçant ;
   o les paramètres du commerçant peuvent (et sont le plus souvent) chiffrés : il appartient au terminal de paiement de déchiffrer ces informations à partir de données dont il a connaissance ;
- défi: spécifie un challenge : le défi provient par exemple d'un serveur distant, différent du serveur de contenu, et permet au terminal de paiement de réaliser une authentification mutuelle, par exemple précédent le paiement, au moment de la préparation de la transaction.

Lorsque les données ont été affichées et que les terminaux de paiement de la borne ont préparé les transactions (par anticipation), des paiements peuvent être réalisés par les utilisateurs en apposant leurs moyens de paiement aux endroits indiqués par les balises de paiement dont au moins certaines données sont affichées à l'écran (par exemple le prix et/ou un logo de paiement sans contact).

Deux évènements peuvent se produire à l'issue de la préparation de la transaction : soit un paiement est réalisé, par un utilisateur, pour une des offres affichées, soit aucun paiement n'est effectué (dans un laps de temps donné). Dans ce cas, le procédé comprend une étape d'annulation des transactions de paiement (PT#) effectuées en avance, l'annulation étant mise en oeuvre lorsqu'une durée d'affichage de l'offre est égale à un paramètre temporel déterminé et lorsqu'aucun paiement n'a été effectué durant la période temporelle débutant à l'issue de la préparation de la transaction et finissant au temps défini par ledit paramètre temporel. Si cette annulation se produit, le procédé précédemment décrit (étapes 10 à 40) est à nouveau mis en oeuvre, entraînant l'affichage de (nouvelles) offres et l'ouverture de nouvelles transactions de paiement par anticipation. De manière astucieuse, le paramètre temporel correspond au temps maximum durant lequel une transaction ouverte par anticipation est active (et/ou active) au niveau du serveur transactionnel (et/ou du serveur qui va traiter la transaction).

### 5.2. Mise en oeuvre d'une balise de paiement

Il y a principalement deux méthodes de mises en oeuvre de cette balise de paiement : une utilisant l'attribut lien et une autre utilisant les attributs descriptifs. La distinction entre la mise en oeuvre de la première méthode et de la deuxième méthode peut prendre en compte les paramètres physiques de la borne de paiement, mais également des paramètres liés à la transaction elle-même (montant par exemple) ou encore des paramètres propres au commerçant (qui gère un ensemble de bornes de paiement). Ainsi, la mise en oeuvre de l'une ou de l'autre méthode est souvent prédéfinie. La mise en oeuvre de la balise de paiement permet au terminal de paiement de créer, par anticipation, la ou les transactions associées aux offres présentes dans le contenu. Ceci est astucieux, car la création, en avance de la transaction permet de traiter celle-ci de manière plus rapide que ce qui est proposé dans les solutions de l'art antérieur.

### 5.2.1 Première méthode de mise en oeuvre

**Une première méthode,** qui ne fait pas l'objet de la présente invention, consiste à fournir, au terminal de paiement, des données de préparation de la transaction par l'intermédiaire d'une URL. Dans ce cas, la balise utilise l'attribut « *link »* qui, s'il est valorisé, comprend un lien (une URL) vers une ressource sécurisée comprenant les données de la transaction à préparer. Cette URL peut être une adresse soit vers le serveur de contenu (celui qui a délivré le contenu html à afficher), soit vers un serveur tiers (un serveur d'un commerçant qui vend le produit).

Cette URL permet par exemple au navigateur (en fonction du matériel cryptographique qu'il embarque) de la borne de prendre connaissance des données de la transaction et de configurer le terminal de paiement pour préparer cette transaction. Cependant, de manière plus efficace cette URL permet directement au terminal de paiement sélectionné de prendre connaissance des données de la transaction et de se configurer en conséquence et de s'authentifier avec un serveur de transaction.

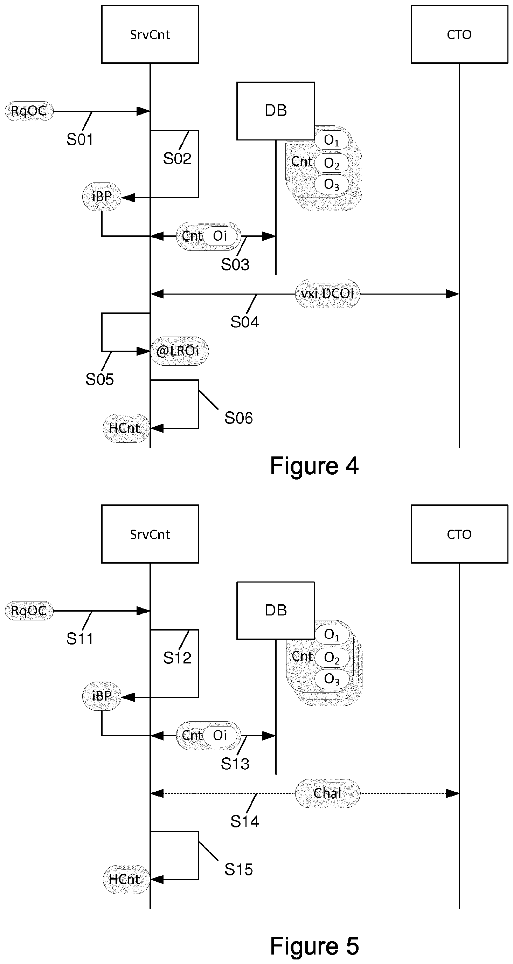

Ainsi, pour mettre en oeuvre une telle méthode, à partir de la balise lien <link>, selon au moins un exemple, décrit en relation avec la figure 4, lorsque le navigateur (Nav) transmet une requête d'obtention de contenu au serveur de contenus (SrvCnt), le procédé suivant est mis en oeuvre par le serveur de contenus (SrvCnt) :
- réception (S01) de la requête (RqOC) en provenance du navigateur (Nav) ;
- identification (S02), par l'intermédiaire de cette requête, de ladite borne de paiement (BP), délivrant un identifiant (iBP) de ladite borne de paiement ;
- obtention (S03), au sein d'une base de donnée (BD), en fonction de l'identifiant (iBP) de la borne de paiement (BP), d'un contenu (Cnt) à transmettre à ladite borne (BP), ledit contenu comprenant au moins une offre (Oi) comprenant des paramètres d'offre (une devise, un montant, une date, une durée et des paramètres du commerçant numéro de compte, banque, par exemple) ;
- obtention (S04), pour chaque offre (Oi) identifiée dans ledit contenu d'un couple de données comprenant un identifiant de terminal de paiement (vxi) et une donnée chiffrée de l'offre (DCOi), cette obtention comprenant :
   - transmission de ladite offre (Oi) à un serveur transactionnel (CTO) ;
   - détermination, parmi les terminaux de paiement (vx1,... vx6) de la borne de paiement, d'un identifiant du terminal de paiement (vxi) en charge d'une transaction associée à cette offre (Oi) ;
   - création, à partir des paramètres de l'offre et/ou d'autres paramètres d'une donnée chiffrée de l'offre (DCOi) ;
      - cette donnée est chiffrée à l'aide de la clé publique du terminal de paiement en charge (vxi) ;
      - lorsque le terminal de paiement prend connaissance de cette donnée, il peut l'authentifier comme étant générée par le serveur de transaction (voir infra).
      - l'attribut « défi » (« challenge ») peut également être généré par le serveur de transaction à cette occasion (pour permettre au terminal de paiement de relever le défi généré par le serveur de transaction avant la préparation de la transaction) ;
   - transmission, par le serveur transactionnel (CTO), au serveur de contenu (SrvCnt), du couple formé par l'identifiant du terminal de paiement (vxi) et ladite donnée chiffrée de l'offre (DCOi) ;
- création (S05), par le serveur de contenu (SrvCnt), d'une adresse de localisation d'offre (@LROi), vers le serveur transactionnel (CTO) comprenant l'identifiant du terminal de paiement (vxi) et ladite donnée chiffrée de l'offre (DCOi) ;
- création (S06), à partir dudit contenu (Cnt) et des adresses de localisation d'offre (@LROi), du contenu html (HCnt) comprenant une balise de paiement (HPElt) par offre (Oi).

Cette méthode présente l'avantage de ne pas nécessiter la fourniture de données « secrètes » au navigateur. En effet, avec cette méthode, le navigateur ne sait pas quelles sont les données de l'offre. Ces données sont chiffrées et transmises directement, par le navigateur (et l'API correspondante) au terminal de paiement dont l'identifiant est présent dans l'URL. Ainsi, même si le navigateur est compromis (i.e. qu'il fait l'objet d'une surveillance pour en altérer le fonctionnement ou pour altérer les opérations de paiement), il n'est pas possible de modifier les données de l'offre, qui sont chiffrées et déchiffrables uniquement par le terminal de paiement désigné pour cette offre (vxi). Cependant, cette méthode présente l'inconvénient, pour le navigateur, de devoir obtenir les données de l'offre de la part du terminal de paiement, et donc nécessiter des échanges supplémentaires entre le terminal de paiement et le navigateur (échanges qui sont bien entendus sécurisés). Ainsi, cette méthode est plus efficace, en termes de sécurité, mais plus contraignant en termes de mise en oeuvre.

### 5.2.2 Deuxième méthode de mise en oeuvre

**Une deuxième méthode** de mise en oeuvre de la balise de paiement, qui fait l'objet de la présente invention, consiste à fournir, au terminal de paiement, des données de préparation de la transaction par l'intermédiaire des attributs de la balise (montant, devise, paramètre du commerçant, date, défi). Dans ce cas, l'attribut lien n'est pas nécessairement utilisé. Par ailleurs, l'obtention des données de la part du serveur de contenu (SrvCnt) est différente de la méthode précédente.

Pour mettre en oeuvre une telle méthode, à partir des balises de l'offre, selon la présente, dans au moins un mode de réalisation, décrit en relation avec la figure 5, lorsque le navigateur (Nav) transmet une requête d'obtention de contenu au serveur de contenus (SrvCnt), le procédé suivant est mis en oeuvre par le serveur de contenus (SrvCnt) :
- réception (S11) de la requête (RqOC) en provenance du navigateur (Nav) ;
- identification (S12), par l'intermédiaire de cette requête, de ladite borne de paiement (BP), délivrant un identifiant (iBP) de ladite borne de paiement ;
- obtention (S13), au sein d'une base de donnée (BD), en fonction de l'identifiant (iBP) de la borne de paiement (BP), d'un contenu (Cnt) à transmettre à ladite borne (BP), ledit contenu comprenant au moins une offre (Oi) comprenant des paramètres d'offre (une devise, un montant, une date, une durée et des paramètres du commerçant numéro de compte, banque, par exemple) ;
- obtention (S14), optionnelle, pour chaque offre (Oi) identifiée dans ledit contenu, auprès d'un serveur transactionnel (CTO), d'un « défi » associé à l'offre (Oi) comprenant :
   - transmission de ladite offre (Oi) au serveur transactionnel (CTO) ;
   - création, à partir des paramètres de l'offre et/ou d'autres paramètres d'une donnée chiffrée (DCChi) de défi ;
   - transmission, par le serveur transactionnel (CTO), de ladite donnée chiffrée (DCCh) de défi ;
- création (S15), à partir dudit contenu (Cnt) et des données de l'offre (Oi), du contenu html (HCnt) comprenant une balise de paiement (HPElt) pour l'offre (Oi), comprenant le défi optionnel (DCChi).

Ce mode de réalisation présente l'avantage de permettre au navigateur d'intégrer directement, au sein de la vue, les données relatives aux offres, sans nécessiter de décodage. Cette mise en oeuvre est moins sécurisée que la première, mais elle est également plus souple. En effet, le navigateur prend directement connaissance des données de l'offre, sans avoir à faire appel au terminal de paiement et peut donc préparer la vue plus rapidement. Le terminal de paiement reçoit également, de la part du navigateur, l'offre qui lui est destinée. Sur la base des données reçues, il transmet une requête au serveur de transactions et une série d'échanges à lieu afin de permettre l'authentification du terminal, du serveur de transaction, de l'offre. Le procédé mis en oeuvre comprend les étapes suivantes :
- une étape de réception, par le terminal de paiement, des paramètres de l'offre ; ils sont transmis par le navigateur par l'intermédiaire d'une API ;
- une étape d'obtention d'une donnée représentative du serveur transactionnel ; elle peut soit être stockée dans une mémoire protégée du terminal de paiement, soit être fournie par le navigateur ;
- une étape de création, à partir des paramètres de l'offre et d'une clé privée du terminal de paiement, d'une donnée chiffrée représentative de l'offre : le terminal de paiement chiffre les données avec sa clé privée et éventuellement avec la clé publique du serveur transactionnel ; ainsi seul le serveur transactionnel disposant à la fois de la clé publique du terminal et de sa clé privée peut déchiffrer les données transmises par le terminal de paiement ;
- une étape de transmission d'une requête de traitement audit serveur transactionnel, ladite requête de traitement comprenant la donnée chiffrée représentative de l'offre et un identifiant du terminal ; et
- lorsque le serveur transactionnel accepte les données transmises par le terminal de paiement, une étape de réception, en provenance du serveur transactionnel, d'une donnée représentative d'une acceptation du traitement d'une transaction, pour ladite offre, par le terminal de paiement.

Ainsi, seul un terminal de paiement et un serveur transactionnel authentiques sont en mesure de préparer une transaction qui soit également authentique. On remarque que l'utilisation de la balise de paiement permet avantageusement de « passer » des données au terminal de paiement de manière transparente pour le serveur de contenu. Ceci permet d'avoir une gestion bien plus simple des contenus à transmettre aux bornes de paiement : il n'est plus nécessaire d'avoir un contenu « propriétaire » et un des contenus standardisés peuvent être utilisés, sans que cela n'ait d'impact sur la sécurité de l'ensemble des transactions réalisées par les bornes de paiement.

### 5.3. Mise en oeuvre d'un paiement

La première méthode de préparation de transaction comprend, comme cela a été explicité précédemment, l'utilisation d'une adresse dans la balise « link ». Ce mode de réalisation est plutôt mis en oeuvre lorsque le terminal de paiement dispose de ses propres ressources de communication vers les serveurs (de paiement et/ou commerçant), comme par exemple sa propre interface réseau, mais cela n'a nullement de caractère obligatoire. Dans ce mode de réalisation, le terminal de paiement récupère les données de transaction depuis une URL de la balise, cette URL (sécurisée, de type *'https:*//*'*) étant transmise par le navigateur. Le terminal de paiement transmet une requête au serveur, qui l'identifie (par exemple grâce au user agent ou à un autre paramètre ajouté par le terminal à l'URL) et vérifie (voire fournit) les données de la transaction (montant, devise, paramètres du commerçant, date, défi « challenge »)).

À l'aide de ces informations, le terminal prépare la transaction, c'est-à-dire qu'il initie la transaction et se met dans l'attente d'un paiement. En d'autres termes, le terminal agit comme si le commerçant avait requis le paiement de la part d'un client. La différence étant qu'a priori ni le commerçant ni le terminal n'ont une quelconque donnée sur la présence ou non, d'un potentiel client. La transaction reste donc « ouverte » pendant un temps prédéterminé. Comme explicité, si un client effectue un paiement, en présentant un moyen de paiement devant l'antenne sans contact du terminal de paiement, la transaction est validée par le terminal de paiement de la borne. L'avantage de cette manière de faire est que la mise en oeuvre de la transaction est rapide, qu'il n'y a pas besoin de détecter la présence de l'utilisateur (du client) puisque c'est lui qui se manifeste en présentant son moyen de paiement sans contact devant le terminal. On résout ainsi, grâce à cette balise et à cette manière d'initier la transaction, l'un des problèmes exposés précédemment avec les bornes de paiement de l'art antérieur, à savoir le besoin de détecter la présence de l'utilisateur avec des capteurs de présence.

Dans la deuxième méthode de préparation de transaction comprend la configuration, par le navigateur, du terminal de paiement pour qu'il prépare la transaction. Ce mode de réalisation est plutôt mis en oeuvre lorsque le terminal de paiement ne dispose pas de ses propres ressources de communication et que le système d'exploitation de la borne fait office de passerelle vers les serveurs (de paiement et/ou commerçant), mais cela n'a rien d'obligatoire. Dans ce mode de réalisation, le navigateur récupère les données de la balise de paiement (montant, devise, paramètres du commerçant, date, défi « challenge ») et transmet ces informations au terminal de paiement par l'intermédiaire d'une API du terminal de paiement, API permettant au système d'exploitation d'échanger de l'information avec le terminal de paiement. Pour le reste, le procédé d'initialisation de la transaction est le même que précédemment et les avantages procurés sont identiques.

### 5.4. Déroulement d'une transaction

La transaction étant préparée (par anticipation), la finalisation de celle-ci est simple. Il suffit, pour ce faire, que l'utilisateur appose son moyen de paiement sans contact (carte sans contact, téléphone) à l'endroit indiqué pour que le terminal de paiement puisse lire les informations contenues dans le moyen de paiement et finaliser la transaction. Pour ce faire, juste après l'initialisation de la transaction, le terminal de paiement émet une requête d'obtention de données de paiement. L'émission de cette requête est effectuée de manière cyclique, tant que dure l'affichage, à l'écran de l'offre de vente (du produit ou du service). Lorsque l'utilisateur appose son moyen de paiement à l'endroit indiqué, les données de paiement sont alors immédiatement lues par le terminal de paiement. Le terminal de paiement finalise la transaction et informe le navigateur de la finalisation de la transaction par l'intermédiaire de l'API du système d'exploitation. Dès lors, le navigateur charge, en lieu et place du contenu précédemment affiché, un contenu de confirmation d'achat.

## Revendications

1. Procédé de traitement d'une transaction de paiement, procédé mis en oeuvre par un dispositif électronique autonome de traitement de transaction de paiement, dite borne de paiement (BP), ladite borne de paiement (BP) comprenant un processeur de traitement (Prc) connecté à au moins un moyen de restitution d'offre de vente (Scr), et relié à au moins une interface de communication (CI) et à au moins un terminal de paiement sans contact (TPNfc), ledit procédé comprenant :
- une étape de transmission (10), par un navigateur (Nav) installé au sein de ladite borne de paiement (BP), d'une requête d'obtention de contenu (RqOC) à un serveur de contenu (SrvCnt) ;
- une étape de réception (20), par ledit navigateur (Nav), en provenance du serveur de contenu (SrvCnt), d'un contenu html (HCnt) représentatif d'au moins une offre de vente, ledit contenu html (HCnt) comprenant une balise de paiement (HPElt) par offre de vente comprise dans ledit contenu html (HCnt) ;
- une étape de traitement (30) dudit contenu html (HCnt), délivrant une vue (Aff) dudit contenu html (HCnt) sur ledit au moins un moyen de restitution (Scr) ;
ledit procédé étant **caractérisé en ce qu'**il comprend en outre une étape d'initialisation (40), avant toute interaction d'un utilisateur avec ladite borne de paiement en vue de répondre à une desdites au moins une offre de vente, d'au moins une transaction de paiement (PT#), chacune desdites au moins une transaction de paiement étant associée à une desdites au moins une offre de vente comprises dans ledit contenu html (HCnt), le nombre de transactions de paiement initialisées étant fonction du nombre de terminaux de paiement installés dans ladite borne de paiement (BP) et du nombre de balises de paiement (HPElt) présentes dans ledit contenu html (HCnt), ladite étape d'initialisation comprenant, pour chacune desdites au moins une transaction de paiement, la configuration d'un différent desdits terminaux de paiement pour la mise en oeuvre de ladite transaction de paiement, en fonction de données d'attributs de la balise de paiement (HPElt) de l'offre de vente associée à ladite transaction de paiement, la configuration d'un terminal de paiement comprenant :
- l'obtention, à partir desdites données d'attributs de la balise de paiement de l'offre de vente associée à ladite transaction de paiement, de paramètres d'offres comprenant une date, un montant, une devise, une durée, et des paramètres bancaires d'un commerçant ;
- l'ouverture d'une transaction associée audits paramètres d'offres au moyen dudit terminal de paiement ;
- le positionnement dudit terminal de paiement dans un état d'attente d'un paiement relatif à ladite transaction ouverte, ledit état d'attente étant maintenu uniquement pendant une durée prédéterminée d'affichage de l'offre de vente sur ledit au moins un moyen de restitution, ladite transaction ouverte étant annulée si aucun paiement n'est effectué pendant ladite durée prédéterminée.

2. Procédé selon la revendication 1, **caractérisé en ce que** la requête d'obtention de contenu (RqOC) comprend au moins une donnée d'identification de borne de paiement.

3. Procédé selon la revendication 1, **caractérisé en ce que** l'étape de traitement (30) du contenu html (HCnt) comprend une étape de détermination, au sein de la vue à restituer, d'un emplacement d'une donnée représentative de la balise de paiement, en fonction d'une position d'une antenne sans contact dudit au moins un terminal de paiement au sein de ladite borne de paiement.

4. Procédé selon la revendication 1, **caractérisé en ce que** ladite balise de paiement comprend au moins un attribut de définition de l'offre.

5. Procédé selon la revendication 4, **caractérisé en ce que** ledit attribut de définition de l'offre est une adresse de localisation (@LR) d'une offre, auprès d'un serveur transactionnel, ladite adresse de localisation comprenant un paramètre d'identification de l'offre et au moins un identifiant d'un terminal de paiement appartenant à ladite borne de paiement.

6. Procédé selon la revendication 1, caractérisé en qu'il comprend une étape d'annulation de ladite au moins une transaction de paiement (PT#), ladite étape d'annulation étant mise en oeuvre lorsqu'une durée d'affichage de l'offre est égale à un paramètre temporel déterminé et lorsqu'aucun paiement n'a été effectué durant la période temporelle débutant à l'issue de l'initialisation de la transaction et finissant au temps défini par ledit paramètre temporel.

7. Procédé selon la revendication 1, **caractérisé en ce qu'**il comprend, précédemment à l'étape de réception (20) par le navigateur (Nav), du contenu comprenant ladite au moins une balise de paiement, au niveau du serveur de contenu (SrvCnt) :
- une étape de réception (S01) de la requête (RqOC) en provenance du navigateur (Nav) ;
- une étape d'identification (S02), par l'intermédiaire de cette requête, de ladite borne de paiement (BP), délivrant un identifiant (iBP) de ladite borne de paiement ;
- une étape d'obtention (S03), au sein d'une base de donnée (DB), en fonction de l'identifiant (iBP), d'un contenu (Cnt) à transmettre à ladite borne (BP), ledit contenu comprenant au moins une offre (Oi) comprenant des paramètres d'offre ;
- une étape d'obtention (S04), pour chaque offre (Oi) identifiée dans ledit contenu d'un couple de données comprenant un identifiant de terminal de paiement (vxi) et une donnée chiffrée de l'offre (DCOi) ;
- création (S05), par le serveur de contenu (SrvCnt), d'une adresse de localisation d'offre (@LROi), vers un serveur transactionnel (CTO) comprenant l'identifiant du terminal de paiement (vxi) et ladite donnée chiffrée de l'offre (DCOi) ;
- création (S06), à partir dudit contenu (Cnt) et des adresses de localisation d'offre (@LROi), du contenu html (HCnt) comprenant une balise de paiement (HPElt) par offre (Oi).

8. Procédé selon la revendication 1, **caractérisé en ce qu'**il comprend, précédemment à l'étape de réception (20) par le navigateur (Nav), du contenu comprenant ladite au moins une balise de paiement, au niveau du serveur de contenu (SrvCnt) :
- une étape de réception (S11) de la requête (RqOC) en provenance du navigateur (Nav) ;
- une étape d'identification (S12), par l'intermédiaire de cette requête, de ladite borne de paiement (BP), délivrant un identifiant (iBP) de ladite borne de paiement ;
- une étape d'obtention (S13), au sein d'une base de donnée (DB), en fonction de l'identifiant (iBP) de la borne de paiement (BP), d'un contenu (Cnt) à transmettre à ladite borne (BP), ledit contenu comprenant au moins une offre (Oi) comprenant des paramètres d'offre ;
- une étape optionnelle d'obtention (S14), pour chaque offre (Oi) identifiée dans ledit contenu, auprès d'un serveur transactionnel (CTO), d'une donnée représentative d'un « défi » (Chal) associé à l'offre (Oi) ;
- une étape de création (S15), à partir dudit contenu (Cnt) et des données de l'offre (Oi), du contenu html (HCnt) comprenant une balise de paiement (HPElt) pour l'offre (Oi), comprenant le défi optionnel (DCChi).

9. Dispositif électronique autonome de traitement de transaction de paiement, dite borne de paiement (BP), ladite borne de paiement (BP) comprenant un processeur de traitement (Prc) connecté à au moins un moyen de restitution d'offre de vente (Scr), et relié à au moins une interface de communication (CI) et à au moins un terminal de paiement sans contact (TPNfc), ledit dispositif comprenant :
- des moyens de transmission, d'une requête d'obtention de contenu (RqOC) à un serveur de contenu (SrvCnt), mis en oeuvre par un navigateur (Nav) installé au sein de ladite borne de paiement (BP) ;
- des moyens de réception, à destination du navigateur (Nav), en provenance du serveur de contenu (SrvCnt), d'un contenu html (HCnt) représentatif d'au moins une offre de vente, ledit contenu html (HCnt) comprenant une balise de paiement (HPElt) par offre de vente comprise dans ledit contenu html (HCnt) ;
- des moyens de traitement dudit contenu html (HCnt), délivrant une vue (Aff) dudit contenu html (HCnt) sur ledit au moins un moyen de restitution (Scr) ;
ledit dispositif étant **caractérisé en ce qu'**il comprend en outre des moyens d'initialisation, avant toute interaction d'un utilisateur avec ladite borne de paiement en vue de répondre à une desdites au moins une offre de vente, d'au moins une transaction de paiement (PT#), chacune desdites au moins une transaction de paiement étant associée à une desdites au moins une offre de vente comprises dans ledit contenu html (HCnt), le nombre de transactions de paiement initialisées étant fonction du nombre de terminaux de paiement installés dans ladite borne de paiement (BP) et du nombre de balises de paiement (HPElt) présentes dans ledit contenu html (HCnt), lesdits moyens d'initialisation comprenant, pour chacune desdites au moins une transaction de paiement, des moyens de configuration d'un différent desdits terminaux de paiement pour la mise en oeuvre de ladite transaction de paiement, en fonction de données d'attributs de la balise de paiement (HPElt) de l'offre de vente associée à ladite transaction de paiement, lesdits moyens de configuration comprenant :
- des moyens d'obtention, à partir desdites données d'attributs de la balise de paiement de l'offre de vente associée à ladite transaction de paiement, de paramètres d'offres comprenant une date, un montant, une devise, une durée, et des paramètres bancaires d'un commerçant ;
- des moyens d'ouverture d'une transaction associée audits paramètres d'offres au moyen dudit terminal de paiement ;
- des moyens de positionnement dudit terminal de paiement dans un état d'attente d'un paiement relatif à ladite transaction ouverte, ledit état d'attente étant maintenu uniquement pendant une durée prédéterminée d'affichage de l'offre de vente sur ledit au moins un moyen de restitution, ladite transaction ouverte étant annulée si aucun paiement n'est effectué pendant ladite durée prédéterminée.

10. Produit programme d'ordinateur téléchargeable depuis un réseau de communication et/ou stocké sur un support lisible par ordinateur et/ou exécutable par un microprocesseur, **caractérisé en ce qu'**il comprend des instructions de code de programme pour l'exécution d'un procédé de traitement selon la revendication 1 à 8, lorsqu'il est exécuté par un processeur.

## Patentansprüche

1. Verfahren zur Verarbeitung eines Zahlungstransaktion, wobei das Verfahren von einer autonomen elektronischen Vorrichtung zur Verarbeitung einer Zahlungstranskation, Zahlautomat (BP) genannt, eingesetzt wird, wobei der Zahlautomat (BP) einen Verarbeitungsprozessor (Prc) umfasst, der an mindestens ein Mittel zur Wiedergabe eines Verkaufsangebots (Scr) angeschlossen und mit mindestens einer Verbindungsschnittstelle (Cl) und mindestens einem kontaktlosen Zahlungsendgerät (TPNfc) verbunden ist, wobei das Verfahren umfasst:
- einen Schritt der Übertragung (10), durch einen in dem Zahlautomaten (BP) installieren Navigator (Nav), einer Anfrage bezüglich des Erhalts eines Inhalts (RqOC) an einen Inhaltsserver (SrvCnt);
- einen Schritt des Empfangs (20) durch den Navigator (Nav) vom Inhaltsserver (SrvCnt) eines html-Inhalts (HCnt), der für mindestens ein Verkaufsangebot repräsentativ ist, umfassend einen Zahlungs-Beacon (HPElt) pro Verkaufsangebot, das in dem html-Inhalt (HCnt) enthalten ist;
- einen Schritt der Verarbeitung (30) des html-Inhalts (HCnt), der eine Ansicht (Aff) des html-Inhalts (HCnt) auf dem mindestens einen Wiedergabemittel (Scr) liefert;
wobei das Verfahren **dadurch gekennzeichnet ist, dass** es ferner vor jeder Interaktion eines Benutzer mit dem Zahlautomaten, um auf eines des mindestens einen Verkaufsangebots zu antworten, einen Schritt der Initialisierung (40) mindestens einer Zahlungstransaktion (PT#) umfasst, wobei jeder der mindestens einen Zahlungstranskationen einem des mindestens einen Verkaufsangebots, das in dem html-Inhalt (HCnt) enthalten ist, zugeordnet ist, wobei die Anzahl von initialisierten Zahlungstransaktionen von der Anzahl von in dem Zahlautomaten (BP) installieren Zahlungsendgeräten und der Anzahl von in dem html-Inhalt (HCnt) vorhanden Zahlungs-Beacons (HPElt) abhängig ist, wobei der Initialisierungsschritt für jede der mindestens einen Zahlungstransaktionen die Konfiguration eines anderen der Zahlungsendgeräte für den Einsatz der Zahlungstransaktion in Abhängigkeit von Attributdaten des Zahlungs-Beacons (HPElt) des der Zahlungstransaktion zugeordneten Verkaufsangebots umfasst, wobei die Konfiguration eines Zahlungsendgeräts umfasst:
- den Erhalt von Angebotsparametern, umfassend ein Datum, eine Summe, eine Währung, eine Dauer, und der Bankparameter eines Händlers auf Basis der Attributdaten des Zahlungs-Beacons des der Zahlungstransaktion zugeordneten Verkaufsangebots;
- die Eröffnung einer den Angebotsparametern zugeordneten Transaktion mit Hilfe des Zahlungsendgeräts;
- die Positionierung des Zahlungsendgeräts in einem Wartezustand auf eine Zahlung in Verbindung mit der eröffneten Transaktion, wobei der Wartezustand nur während einer vorbestimmten Anzeigedauer des Verkaufsangebots auf dem mindestens einen Wiedergabemittel aufrecht erhalten wird, wobei die eröffnete Transaktion gelöscht wird, wenn während der vorbestimmten Dauer keine Zahlung erfolgt ist.

2. Verfahren nach Anspruch 1, **dadurch gekennzeichnet, dass** die Anfrage bezüglich Erhalt eines Inhalts (RqOC) mindestens ein Identifikationsdatum eines Zahlautomaten umfasst.

3. Verfahren nach Anspruch 1, **dadurch gekennzeichnet, dass** der Verarbeitungsschritt (30) des html-Inhalts (HCnt) einen Schritt der Bestimmung eines Standorts eines für den Zahlautomaten repräsentativen Datums in der wiederzugebenden Ansicht in Abhängigkeit von einer Position einer kontaktlosen Antenne des mindestens einen Zahlungsendgeräts in dem Zahlautomaten umfasst.

4. Verfahren nach Anspruch 1, **dadurch gekennzeichnet, dass** der Zahlungs-Beacon mindestens ein Attribut zur Definition des Angebots umfasst.

5. Verfahren nach Anspruch 4, **dadurch gekennzeichnet, dass** das Attribut zur Definition des Angebots eine Lokalisierungsadresse (@LR) eines Angebots bei einem Transaktionsserver ist, wobei die Lokalisierungsadresse einen Parameter zur Identifikation des Angebots und mindestens einen Identifikator eines dem Zahlautomaten angehörenden Zahlungsendgeräts umfasst.

6. Verfahren nach Anspruch 1, **dadurch gekennzeichnet, dass** es einen Schritt der Löschung der mindestens einen Zahlungstransaktion (PT#) umfasst, wobei der Löschungsschritt eingesetzt wird, wenn eine Anzeigedauer des Angebots gleich einem bestimmten Zeitparameter ist, und wenn keine Zahlung während des Zeitraums, der nach der Initialisierung der Transaktion beginnt und mit der durch den Zeitparameter definierten Zeit endet, durchgeführt wurde.

7. Verfahren nach Anspruch 1, **dadurch gekennzeichnet, dass** es vor dem Schritt des Empfangs (20) des Inhalts, umfassend den mindestens einen Zahlungs-Beacon, im Bereich des Inhaltsservers (SrvCnt) durch den Navigator (Nav) umfasst:
- einen Schritt des Empfangs (S01) der vom Navigator (Nav) kommenden Anfrage (RqOC);
- einen Schritt der Identifikation (S02) des Zahlautomaten (BP) über diese Anfrage, der einen Identifikator (iBP) des Zahlautomaten liefert;
- einen Schritt des Erhalts (S03) eines an den Automaten (BP) zu übertragenden Inhalts (Cnt) in einer Datenbasis (DB) in Abhängigkeit von dem Identifikator (iBP), wobei der Inhalt mindestens ein Angebot (Oi), umfassend Angebotsparameter, umfasst;
- einen Schritt des Erhalts (S04) eines Datenpaars, umfassend einen Identifikator eines Zahlungsendgeräts (vxi) und ein verschlüsselts Datum des Angebots (DCOi) für jedes in dem Inhalt identifizierte Angebot (Oi);
- Erzeugung (S05) einer Lokalisierungsadresse eines Angebots (@LROi) durch den Inhaltsserver (SrvCnt) zu einem Transaktionsserver (CTO), umfassend den Identifikator des Zahlungsendgeräts (vxi) und das verschlüsselte Datum des Angebots (DCOi);
- auf Basis des Inhalts (Cnt) und der Informationslokalisierungsadressen (@LROi) Erzeugung (S06) des html-Inhalts (HCnt), umfassend einen Zahlungs-Beacon (HPElt) pro zu Angebot (Oi).

8. Verfahren nach Anspruch 1, **dadurch gekennzeichnet, dass** es vor dem Schritt des Empfangs (20) des Inhalts, umfassend den mindestens einen Zahlungs-Beacon, im Bereich des Inhaltsservers (SrvCnt) durch den Navigator (Nav) umfasst:
- einen Schritt des Empfangs (S11) der vom Navigator (Nav) kommenden Anfrage (RqOC);
- einen Schritt der Identifikation (S12) des Zahlautomaten (BP) über diese Anfrage, der einen Identifikator (iBP) des Zahlautomaten liefert;
- einen Schritt des Erhalts (S13) eines an den Automaten (BP) zu übertragenden Inhalts (Cnt) in einer Datenbasis (DB) in Abhängigkeit von dem Identifikator (iBP) des Zahlautomaten (BP), wobei der Inhalt mindestens ein Angebot (Oi), umfassend Angebotsparameter, umfasst;
- einen optionalen Schritt des Erhalts (S14) eines für eine "Aufgabe" (Chal) repräsentativen Datums, die dem Angebot (Oi) zugeordnet ist, für jedes in dem Inhalt beim Transaktionsserver (CTO) identifizierte Angebot (Oi);
- einen Schritt der Erzeugung (S15) des html-Inhalts (HCnt) auf Basis des Inhalts (Cnt) und der Daten des Angebots (Oi), umfassend einen Zahlungs-Beacon (HPElt) für das Angebot (Oi), umfassend die optionale Aufgabe (DCChi).

9. Autonome elektronische Vorrichtung zur Verarbeitung einer Zahlungstransaktion, Zahlautomat (BP) genannt, eingesetzt wird, wobei der Zahlautomat (BP) einen Verarbeitungsprozessor (Prc) umfasst, der an mindestens ein Mittel zur Wiedergabe eines Verkaufsangebots (Scr) angeschlossen und mit mindestens einer Verbindungsschnittstelle (CI) und mindestens einem kontaktlosen Zahlungsendgerät (TPNfc) verbunden ist, wobei die Vorrichtung umfasst:
- Mittel zur Übertragung einer Anfrage bezüglich des Erhalts eines Inhalts (RqOC) an einen Inhaltsserver (SrvCnt), die durch einen in dem Zahlautomaten (BP) installierten Navigator (Nav) durchgeführt wird;
- Mittel zum Empfang durch den Navigator (Nav) vom Inhaltsserver (SrvCnt) eines html-Inhalts (HCnt), der für mindestens ein Verkaufsangebot repräsentativ ist, wobei der html-Inhalt (HCnt) einen Zahlungs-Beacon (HPElt) pro Verkaufsangebot, das in dem html-Inhalt (HCnt) enthalten ist, umfasst;
- Mittel zur Verarbeitung html-Inhalts (HCnt), die eine Ansicht (Aff) des html-Inhalts (HCnt) auf dem mindestens einen Wiedergabemittel (Scr) liefern;
wobei die Vorrichtung **dadurch gekennzeichnet ist, dass** sie ferner vor jeder Interaktion eines Benutzer mit dem Zahlautomaten, um auf eines des mindestens einen Verkaufsangebots zu antworten, Mittel zur Initialisierung mindestens einer Zahlungstransaktion (PT#) umfasst, wobei jeder der mindestens einen Zahlungstranskationen einem des mindestens einen Verkaufsangebots, das in dem html-Inhalt (HCnt) enthalten ist, zugeordnet ist, wobei die Anzahl von initialisierten Zahlungstransaktionen von der Anzahl von in dem Zahlautomaten (BP) installieren Zahlungsendgeräten und der Anzahl von in dem html-Inhalt (HCnt) vorhanden Zahlungs-Beacons (HPElt) abhängig ist, wobei die Initialisierungsmittel für jede der mindestens einen Zahlungstransaktionen Mittel zur Konfiguration eines anderen der Zahlungsendgeräte für den Einsatz der Zahlungstransaktion in Abhängigkeit von Attributdaten des Zahlungs-Beacons (HPElt) des der Zahlungstransaktion zugeordneten Verkaufsangebots umfasst, wobei die Konfigurationsmittel umfassen:
- Mittel zum Erhalt von Angebotsparametern, umfassend ein Datum, eine Summe, eine Währung, eine Dauer, und der Bankparameter eines Händlers auf Basis der Attributdaten des Zahlungs-Beacons des der Zahlungstransaktion zugeordneten Verkaufsangebots;
- Mittel zur Eröffnung einer den Angebotsparametern zugeordneten Transaktion mit Hilfe des Zahlungsendgeräts;
- Mittel zur Positionierung des Zahlungsendgeräts in einem Wartezustand auf eine Zahlung in Verbindung mit der eröffneten Transaktion, wobei der Wartezustand nur während einer vorbestimmten Anzeigedauer des Verkaufsangebots auf dem mindestens einen Wiedergabemittel aufrecht erhalten wird, wobei die eröffnete Transaktion gelöscht wird, wenn während der vorbestimmten Dauer keine Zahlung erfolgt ist.

10. Computerprogrammprodukt, das von einem Verbindungsnetz heruntergeladen werden kann und/oder auf einem von einem Computer lesbaren Träger gespeichert ist und/oder von einem Mikroprozessor ausgeführt werden kann, **dadurch gekennzeichnet, dass** es Programmcodebefehle für die Ausführung eines Verarbeitungsverfahrens nach Anspruch 1 bis 8 umfasst, wenn es von einem Prozessor ausgeführt wird.

## Claims

1. Method for processing a payment transaction, the method being implemented by an autonomous electronic device for the processing of payment transactions, called a payment kiosk (BP), said payment kiosk (BP) comprising a processor (Prc) connected to at least one rendering means (Src) for rendering sales offers, and linked to at least one communications interface (Cl) and to at least one contactless payment terminal (TPNfc), said method comprising:
- a step for the transmission (10), by a browser (Nav) installed within said payment kiosk (BP), of a request for obtaining contents (RqOC) made to a contents server (SrvCnt);
- a step for the reception (20), by said browser (Nav), coming from the contents server (SrvCnt), of an HTML content (HCnt) representative of at least one sales offer, said HTML content comprising one payment tag (HPElt) per sales offer included in said HTML content (HCnt);
- a step for processing (30) said HTML content (HCnt), delivering a view (Aff) of said HTML content (HCnt) on said at least one rendering means (Scr);
said method being **characterized in that** it further comprises a step for the initialization (40), prior to any interaction of a user with said payment kiosk in order to respond to one of said at least one sales offer, of at least one payment transaction (PT#), each of said at least one payment transaction being associated with one of said at least one sales offer included in said html content (HCnt), the number of initialized payment transactions being a function of the number of payment terminals installed in said payment kiosk (BP) and the number of payment tags (HPElt) present in said html content (HCnt), said initialization step comprising, for each of said at least one payment transaction, the configuration of a different one of said payment terminals for the implementation of said payment transaction, as a function of data attributes of the payment tag (HPElt) of the sales offer associated with said payment transaction, the configuration of a payment terminal comprising:
- obtaining, from said data attributes of the payment tag of the sales offer associated with said payment transaction, offer parameters comprising a date, an amount, a currency, a duration, and banking parameters of a merchant;
- opening a transaction associated with said offer parameters by means of said payment terminal;
- positioning said payment terminal in a state of waiting for a payment relating to said opened transaction, said waiting state being maintained only for a predetermined duration of display of the sales offer on said at least one rendering means, said opened transaction being cancelled if no payment is made during said predetermined duration.

2. Method according to claim 1, **characterized in that** the request for obtaining content (RqOC) comprises at least one piece of data for identifying a payment kiosk.

3. Method according to claim 1, **characterized in that** the step for processing (30) said HTML content (HCnt) comprises a step for the determining, within the view to be rendered, of a location of a piece of data representing the payment tag as a function of a position of a contactless antenna of said at least one payment terminal within said payment kiosk.

4. Method according to claim 1, **characterized in that** said payment tag comprises at least one attribute defining the offer.

5. Method according to claim 4, **characterized in that** said attribute defining the offer is an offer-locating address (@LR) in a transaction server, said locating address comprising a parameter for identifying the offer and at least one identifier of a payment terminal belonging to said payment kiosk.

6. Method according to claim 1, **characterized in that** it comprises a step for cancelling said at least one payment transaction (PT#), said step for cancelling being implemented when a duration of display of the offer is equal to a determined time parameter and when no payment has been made during the period of time starting at the end of the initialization of the transaction and finishing at the time defined by said time parameter

7. Method according to claim 1, **characterized in that** it comprises, prior to the step of reception (20) by the browser (Nav) of the content comprising said at least one payment tag, at the contents server (SrvCnt):
- a step for receiving (S01) the request (RqOC) coming from the browser (Nav);
- a step of identification (S02), by means of this request, of said payment kiosk (BP), delivering an identifier (iBP) of said payment kiosk;
- a step for the obtaining (S03), within a database (DB), as a function of the identifier (iBP), of a content (Cnt) to be transmitted to said kiosk (BP), said content comprising at least one offer (Oi) comprising offer parameters;
- a step for the obtaining (S04), for each offer (Oi) identified in said content, of a pair of pieces of data comprising a payment terminal identifier (vxi) and a piece of encrypted data of the offer (DCOi);
- the creation (S05), by means of the contents server (SrvCnt), of an offer-locating address (@LROi) to a transaction server (CTO) comprising the payment terminal identifier (vxi) and said piece of encrypted data of the offer (DCOi);
- the creation (S06), using said content (Cnt) and offer-locating addresses (@LROi), of the HTML content (HCnt) comprising one payment tag (HPElt) per offer (Oi).

8. Method according to claim 1, **characterized in that** it comprises, prior to the step of reception (20) by the browser (NAV) of the content comprising said at least one payment tag, at the contents server (SrvCnt):
- a step for receiving (S11) the request (RqOC) coming from the browser (Nav);
- a step of identification (S12), by means of this request, of said payment kiosk (BP) delivering an identifier (iBP) of said payment kiosk;
- a step for the obtaining (S13), within a database (DB), as a function of the identifier (iBP) of the payment kiosk (BP), of a content (Cnt) to be transmitted to said kiosk (BP), said content comprising at least one offer (Oi) comprising offer-related parameters;
- an optional step for the obtaining (S14), for each offer (Oi) identified in the content, with a transaction server (CTO), of a piece of data representing a "challenge"(Chal) associated with the offer (Oi);
- a step of creation (S15), from said content (Cnt) and said data on the offer (Oi), of the HTML content (HCnt) comprising a payment tag (HPElt) for the offer (Oi), comprising the optional challenge (Chal).

9. Autonomous electronic device for the processing of payment transactions, called a payment kiosk (BP), said payment kiosk (BP) comprising a processing server (Prc) connected to at least one rendering means (Src) for rendering sales, and linked to at least one communications interface (Cl) and to at least one contactless payment terminal (TPNfc), said device comprising:
- means of transmission of a request for obtaining content (RqOC) to a contents server (SrvCnt), implemented by a browser installed within said payment kiosk (BP);
- means of reception, addressed to said browser (Nav), coming from the contents server (SrvCnt), of an HTML content (HCnt) representative of at least one sales offer, said HTML content comprising one payment tag (HPElt) per sales offer included in said HTML content (HCnt);
- means for processing said HTML content (HCnt), delivering a view (Aff) of said HTML content (HCnt) on said at least one rendering means (Scr);
said device being **characterized in that** it further comprises means of initialization, prior to any interaction of a user with said payment kiosk in order to respond to one of said at least one sales offer, of at least one payment transaction (PT#), each of said at least one payment transaction being associated with one of said at least one sales offer included in said html content (HCnt), the number of initialized payment transactions being a function of the number of payment terminals installed in said payment kiosk (BP) and the number of payment tags (HPElt) present in said html content (HCnt), said means of initialization comprising, for each of said at least one payment transaction, means for the configuration of a different one of said payment terminals for the implementation of said payment transaction, as a function of data attributes of the payment tag (HPElt) of the sales offer associated with said payment transaction, said means for the configuration comprising:
- means for obtaining, from said data attributes of the payment tag of the sales offer associated with said payment transaction, offer parameters comprising a date, an amount, a currency, a duration, and banking parameters of a merchant;
- means for opening a transaction associated with said offer parameters by means of said payment terminal;
- means for positioning said payment terminal in a state of waiting for a payment relating to said opened transaction, said waiting state being maintained only for a predetermined duration of display of the sales offer on said at least one rendering means, said opened transaction being cancelled if no payment is made during said predetermined duration.

10. Computer program product downloadable from a communications network and/or stored on a computer-readable support and/or executable by a microprocessor **characterized in that** it comprises program code instructions for the execution of a method of processing according to claims 1 to 8, when it is executed by a processor.
